# EUROPEAN PATENT SPECIFICATION

(11) **EP 0 890 333 B1**
(45) Date of publication and mention of the grant of the patent: **02.05.2003**
(21) Application number: 98300871.5
(22) Date of filing: 05.02.1998
(51) Int. Cl.: A47J 43/18

(54) **Spit**
Spiess
Broche

(30) Priority: 12.07.1997 KR 9732411
(43) Date of publication of application: 13.01.1999
(73) Proprietor: Samsung Electronics Co., Ltd., Suwon City, Kyungki-do (KR)
(72) Inventor: Kim, Dae-rae, Whasung-kun, Kyungki-do (KR)
(74) Representative: Geary, Stuart Lloyd

(56) References cited:
- EP-A- 0 648 065
- AU-B- 562 277
- BE-A- 901 209
- FR-A- 1 151 237
- GB-A- 592 641
- US-A- 2 458 239
- US-A- 2 584 295
- US-A- 5 008 508

## Description

The present invention relates to a spit comprising a skewer and a support member for supporting the skewer and coupling means provided on the support member and the skewer to enable separation of the skewer from the support member and to enable it to be coupled to the support member in an operational configuration in which the skewer is substantially vertical when the spit is resting on the support member, and a non-operational configuration in which the spit is significantly flatter than when the skewer is coupled to the support member in its operational configuration. The above features are disclosed in document AU562277.

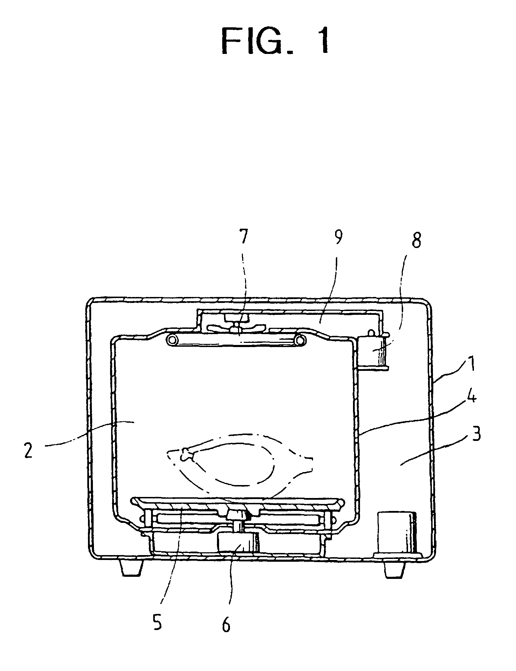

A sectional view of a conventional microwave oven is illustrated in Figure 1 and is an appliance which cooks food using microwave energy generated by a magnetron.

A conventional microwave oven includes a housing 1 surrounding a cooking chamber 2 for cooking food therein and a component compartment 3 in which microwave energy and heat from a magnetron 8 and a heater 7 is respectively generated and directed into the cooking chamber 2. The cooking chamber 2 and component compartment 3 are separated from each other by an inner panel 4.

A tray 5, on which a food container is placed, is disposed on the lower surface of the cooking chamber 2 and the heater 7 is disposed at the top of cooking chamber 2. The tray 5 is rotated by a motor 6 disposed under tray 5.

A high voltage transformer (not shown) is disposed in the component compartment 3, and a guide tube 9 for guiding and dissipating the microwave energy in the cooking chamber is provided between the magnetron 8 and the cooking chamber 2.

When the conventional microwave oven of the type described above is used, microwave energy is generated by the magnetron 8 and is guided through guide tube 9 into the cooking chamber 2. Food in the cooking chamber 2 is also heated by heat supplied by the heater 7. Whilst cooking is in progress, the driving motor 6 rotates the tray 5 at a low constant speed to disperse the microwave energy throughout the food and ensure that it cooks uniformly.

The conventional microwave oven include various supplementary devices depending on the type of the food to be cooked. For example, a roasting spit 10 is often supplied to enable, for example, a chicken to be roasted.

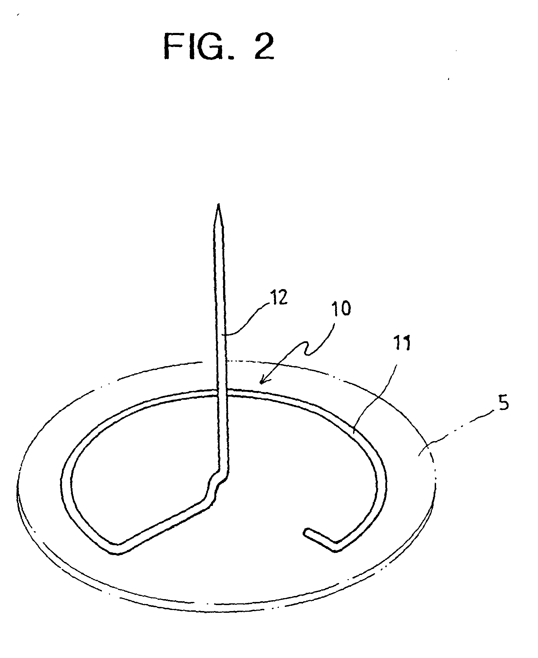

A typical roasting spit 10 is shown in Figure 2 and includes a ring-shaped support member 11 and a skewer 12. Support member 11 is placed on the tray 5 and the skewer 12, which is formed from one end of support member 11, is bent so that the skewer 12 extends upwardly from the tray 5 in the cooking chamber 2 to enable food to be roasted to be spiked by the skewer and held thereby. The tip of the skewer 12 has a sharp point to enable it to pierce food easily.

The food is roasted as the tray 5, on which the roasting spit 10 is placed, rotates during operation of the microwave oven.

A conventional roasting spit 10 of the type described above has several disadvantages. As it is made by bending a thin, long single rod-shaped member, skewer 12 extends upwardly and its sharp unprotected tip creates a safety hazard. Furthermore, its shape means that it is difficult and expensive to package securely for distribution to customers and to store when not in use.

It is an object of the present invention to overcome or substantially alleviate the aforementioned disadvantages with a conventional roasting spit.

A spit in accordance with the present invention is characterised in that the support member comprises an arcuate portion extending for greater than 180 degrees, a first terminal portion extending radially inwardly from one end of the arcuate portion, and a second terminal portion extending radially inwardly from the other end of the arcuate portion, and then axially with respect to the arcuate portion.

In a preferred embodiment, coupling means are provided on the support member and the skewer.

Preferably, the coupling means enables the skewer to be coupled to the support member in operational and non-operational configurations.

Preferably, when the skewer is coupled to the support member in its non-operational configuration, the spit is significantly flatter than when the skewer is coupled to the support member in its operational configuration.

The coupling means may conveniently comprise corresponding male and female screw threads on the support member and skewer or, alternatively, the coupling means may comprise a push-fit coupling.

A further disadvantage with a conventional roasting spit of the type described above is that food placed on the skewer to be roasted tends to slide down the skewer during cooking.

The aforementioned problem with a conventional roasting spit is overcome or substantially alleviated by providing a roasting spit which is characterised by means formed integrally with the skewer to prevent food from sliding down the skewer.

Preferably, the means to prevent food from sliding down the skewer comprises a kink in the skewer.

The roasting spit according to the present invention is described specifically with reference to a spit for use in a microwave oven. However, it will be appreciated that the spit could also be employed in other cooking appliances.

Embodiments of the present invention will now be described, by way of example only, with reference to the accompanying drawings, in which:
Figure 1 is a schematic sectional view showing the inner construction of a conventional microwave oven;
Figure 2 is a perspective view showing a conventional roasting spit;
Figure 3 is an exploded perspective view showing a roasting spit according to a first embodiment of the present invention;
Figure 4 is an enlarged exploded perspective view of the portion marked 'A' in Figure 3;
Figure 5 is an enlarged exploded perspective view showing a coupling portion according to a second embodiment of the present invention;
Figure 6 is an exploded perspective view showing a roasting spit according to a third embodiment of the present invention;
Figure 7 is an enlarged exploded perspective view showing a roasting spit according to a fourth embodiment of the present invention; and
Figure 8 is a view showing a preferred roasting spit inserted into a roast and disposed on a tray.

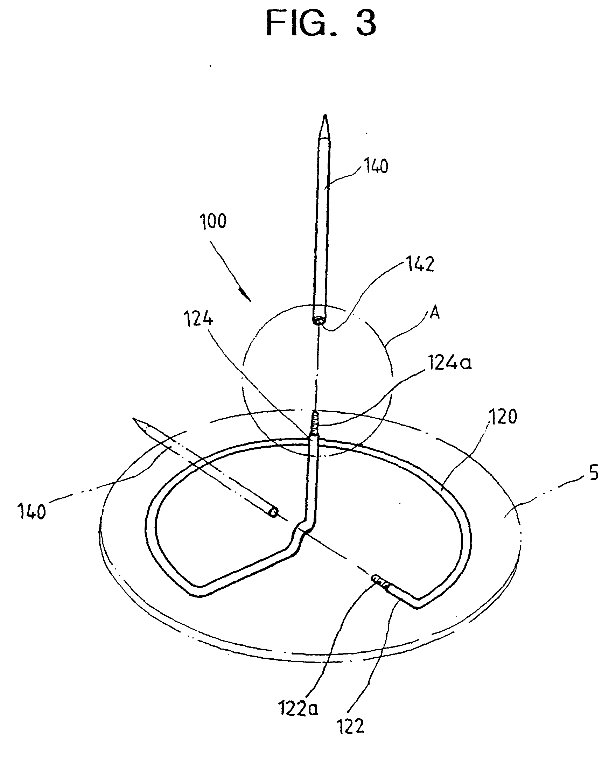

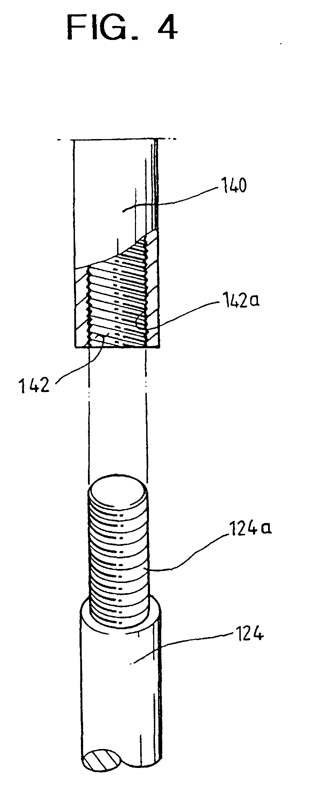

A roasting spit 100 according to the first embodiment of the present invention is illustrated in Figures 3 and 4 and includes a ring-shaped support member 120 and skewer 140. Support member 120 is placed on a tray 5 and the skewer 140 is releasably coupled to the support member 120.

A horizontal end portion 122 of the support member 120 resting in contact with the tray 5 is bent radially inwardly toward the centre of the tray 5 whilst the other vertical end portion 124 extends upwardly from the tray 5. Both the end portions 122,124 terminate in male screw threads 122a and 124a respectively. The skewer 140 is provided with a threaded coupling hole 142 corresponding to the screw threads 122a,124a on the end portion 122 and vertical portion 124 respectively, as can be seen more clearly in Figure 4.

According to the first embodiment of the present invention as described above, the skewer 140 can be coupled to the vertical end portion 124 of support member 120 when in use, and coupled to the horizontal end portion 122 of the support member 120 when not being used, to enable it to be kept safely.

According to the first embodiment of the invention, the skewer 140 and the support member 120 for supporting the skewer 140 on the tray 5 are formed separately from each other. Therefore, when the roasting spit 100 is not being used the skewer 140 can be coupled to the horizontal end portion 122 for storage purposes. When the skewer 140 is located in this position, it does not protrude upwardly thereby preventing possible injury to a user or other person handling the spit 100. In addition, when the skewer 140 is coupled to the horizontal end portion 122, the roasting spit takes up much less space and this results in it being easier and cheaper to package for transportation as well as greatly reducing the package size.

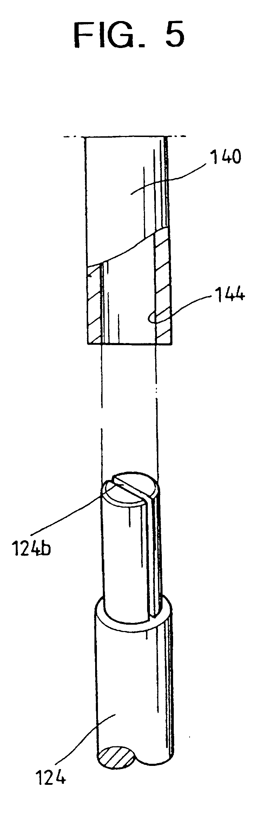

An alternative method of coupling the skewer 140 to the support member 120 is illustrated in Figure 5.

The roasting spit according to the second embodiment of the present invention shown in Figure 5 is similar to roasting spit 100 according to the first embodiment. However, instead of screw thread 124a,122a, the horizontal end portion 122 and vertical end portion 124 terminate in a narrowed cylindrical portion having a longitudinal slot 124b therein. The slot 124b enables the horizontal end portion 122 and vertical end portion 124 to be push fitted into the coupling hole 142 in the skewer which does not require an internal thread. The slot 124b allows the cylindrical portion to deform slightly to accommodate small dimensional differences between the diameter of the coupling hole 142 and the diameter of the cylindrical portion.

The roasting spit according to the second embodiment of the present invention described above provides not only the same advantages and effect as the roasting spit according to the first embodiment but also a further advantage that the horizontal and vertical end portions 122 and 124 of support member 120 can be coupled to the skewer 140 more easily and quickly.

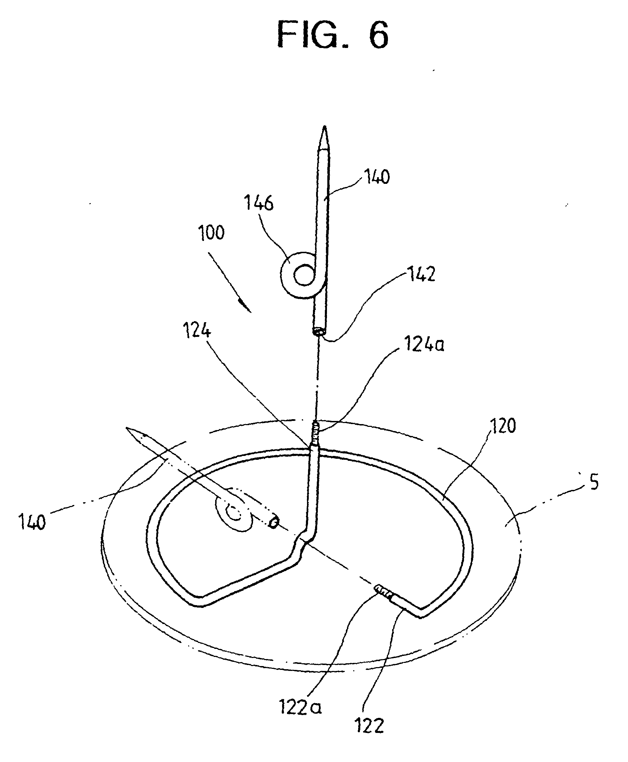

A third embodiment of the present invention is illustrated in Figure 6 and has a similar construction to the first embodiment shown in Figures 3 and 4. In the third embodiment, the roasting spit 100 further includes a kink or knot 146 in the skewer 140 to prevent the food being roasted from slipping down the skewer 140 during cooking.

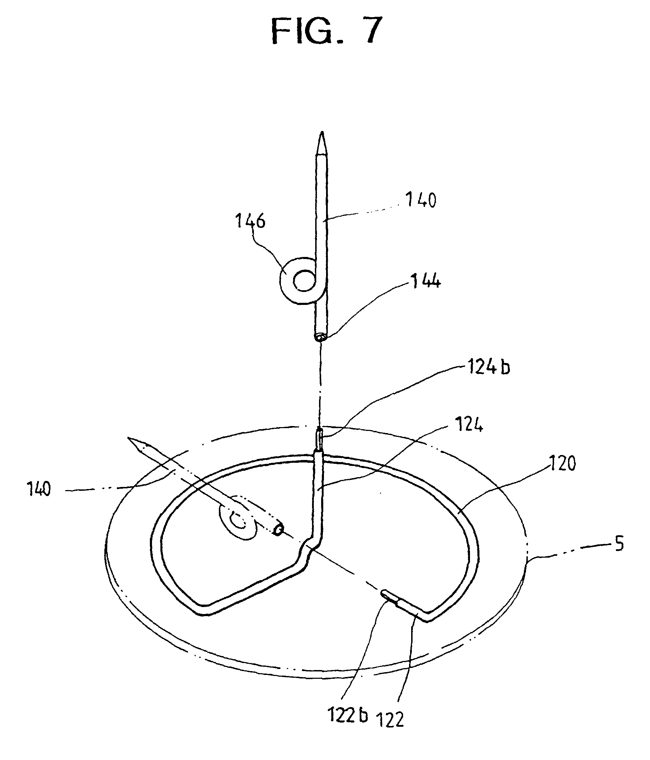

The embodiment of Figure 7 is similar to that of Figure 6 except that the horizontal and vertical portions 122,124 of the support member 120 are coupled by the arrangement described with reference to the second embodiment.

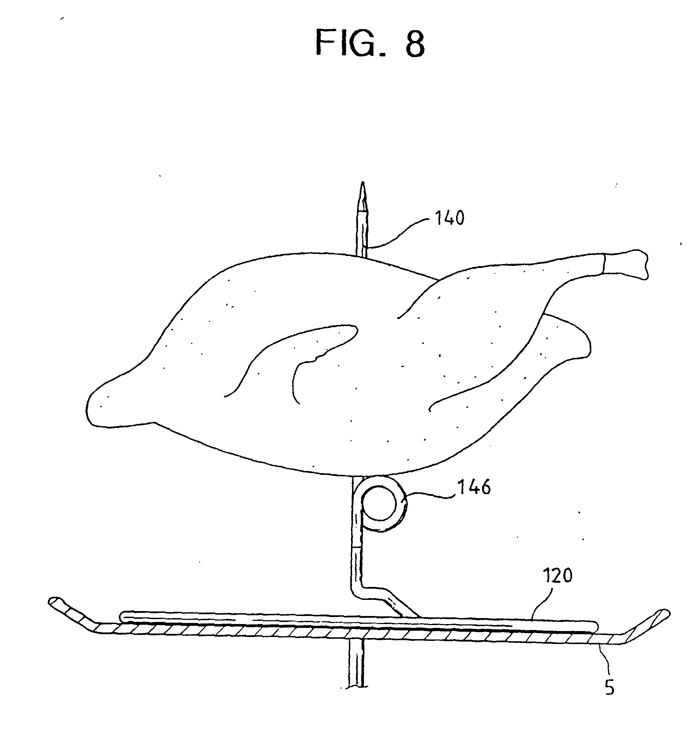

As described above, the food to be roasted is prevented from sliding down the skewer 140 by the holding knot as shown in Figure 8.

The third and the fourth embodiments provides an additional and distinct advantage from those described with reference to the first and second embodiments as the food to be roasted is prevented from slipping down the skewer 140 during cooking.

While the present invention has been particularly shown and described with reference to the foregoing embodiments, it will be understood by those skilled in the art that various changes in form and detail may be effected therein without departing from the scope of the invention as defined by the appended claims.

## Claims

1. A spit comprising a skewer (140), a support member (120) for supporting the skewer (140) and coupling means (122a,124a,142) provided on the support member (120) and the skewer (140) to enable separation of the skewer (140) from the support member (120), and to enable it to be coupled to the support member (120) in an operational configuration in which the skewer (140) is substantially vertical when the spit is resting on the support member, and a non-operational configuration in which the spit is significantly flatter than when the skewer is coupled to the support member in its operational configuration, **characterised in that** the support member (120) comprises an arcuate portion extending for greater than 180 degrees, a first terminal portion (122) extending radially inwardly from one end of the arcuate portion, and a second terminal portion (124) extending radially inwardly from the other end of the arcuate portion, and then axially with respect to the arcuate portion.

2. A spit according to claim 1, wherein the coupling means (122a,124a,142) comprises corresponding male and female screw threads on the support member (120) and skewer (140).

3. A spit according to claim 1 or claim 2, wherein the coupling means (122a,124a,142) comprises a push-fit coupling.

4. A spit according to any preceding claim wherein the skewer (140) includes means (146) to prevent food from sliding down the skewer (140).

5. A spit according to claim 4, wherein said means (146) comprises a kink in the skewer.

6. A microwave oven comprising a cooking chamber in which a spit according to any preceding claim is disposed.

## Patentansprüche

1. Bratspießvorrichtung, umfassend ein Spießelement (140), ein Tragelement (120) zum Tragen des Spießelements (140) und an dem Tragelement (120) und dem Spießelement (140) vorgesehene Verbindungsmittel (122a, 124a, 142), so dass das Spießelement (140) von dem Tragelement (120) getrennt und so dass es mit dem Tragelement (120) in einer Gebrauchskonfiguration, in der das Spießelement (140) im Wesentlichen senkrecht ist, wenn die Bratspießvorrichtung auf dem Tragelement ruht, und in einer Nichtgebrauchskonfiguration verbunden werden kann, in der die Bratspießvorrichtung wesentlich flacher ist, als wenn das Spießelement in der Gebrauchskonfiguration mit dem Tragelement verbunden ist, **dadurch gekennzeichnet, dass** das Tragelement (120) einen bogenförmigen Abschnitt, der sich über mehr als 180 Grad erstreckt, einen ersten Anschlussabschnitt (122), der von einem Ende des bogenförmigen Abschnitts radial einwärts verläuft, und einen zweiten Anschlussabschnitt (124) aufweist, der von dem anderen Ende des bogenförmigen Abschnitts radial einwärts und dann axial in Bezug auf den bogenförmigen Abschnitt verläuft.

2. Bratspießvorrichtung nach Anspruch 1, bei der die Verbindungsmittel (122a, 124a, 142) entsprechende Innenund Außengewinde an Tragelement (120) und Spießelement (140) umfassen.

3. Bratspießvorrichtung nach Anspruch 1 oder Anspruch 2, bei der die Verbindungsmittel (122a, 124a, 142) eine Zusammensteckkupplung umfassen.

4. Bratspießvorrichtung nach einem der vorherigen Ansprüche, bei dem das Spießelement (140) ein Mittel (146) aufweist, um zu verhindern, dass ein Lebensmittel an dem Spießelement (140) hinabgleitet.

5. Bratspießvorrichtung nach Anspruch 4, bei dem das genannte Mittel (146) eine Schlaufe im Spießelement umfasst.

6. Mikrowellenherd, umfassend eine Kochkammer, in der eine Bratspießvorrichtung nach einem der vorherigen Ansprüche angeordnet ist.

## Revendications

1. Une rôtissoire comprenant une broche (140), un élément de support (120) pour supporter la broche (140) et des moyens d'accouplement (122a,124a,142) prévus sur l'élément de support (120) et sur la broche (140) pour rendre possible la séparation entre la broche (140) et l'élément de support (120) et l'accouplement avec l'élément de support (120) en une configuration de fonctionnement en laquelle la broche (140) est sensiblement verticale lorsque la rôtissoire repose sur l'élément de support, et une configuration de repos en laquelle la rôtissoire est significativement plus plate que lorsque la broche est accouplée à l'élément de support en sa configuration de fonctionnement, **caractérisée en ce que** l'élément de support (120) comprend une partie en forme d'arc qui s'étend sur plus de 180 degrés, une première partie terminale (122) s'étendant radialement vers l'intérieur depuis une extrémité de la partie en forme d'arc, et une deuxième partie terminale (124) s'étendant radialement vers l'intérieur depuis l'autre extrémité de la partie en forme d'arc, puis axialement relativement à la partie en forme d'arc.

2. Une rôtissoire selon la revendication 1, dans laquelle les moyens d'accouplement (122a,124a,142) comprennent des filets de vis mâles et femelles correspondants sur l'élément de support (120) et sur la broche (140).

3. Une rôtissoire selon la revendication 1 ou la revendication 2, dans laquelle les moyens d'accouplement (122a,124a,142) comprennent un accouplement à ajustage gras.

4. Une rôtissoire selon l'une quelconque des revendications précédentes, dans laquelle la broche (140) comprend des moyens (146) pour empêcher les aliments de glisser vers le bas sur la broche (140).

5. Une rôtissoire selon la revendication 4, dans laquelle lesdits moyens (146) comprennent une boucle dans la broche.

6. Un four à micro-ondes qui comprend une chambre de cuisson dans laquelle est disposée une rôtissoire selon l'une quelconque des revendications précédentes.
